**Europäisches Patentamt**

**European Patent Office**

**Office européen des brevets**

(19)

(11) Veröffentlichungsnummer: **0 232 269**
**B1**

(12) # EUROPÄISCHE PATENTSCHRIFT

(45) Veröffentlichungstag der Patentschrift:
04.01.89

(51) Int. Cl.⁴: **B 62 D 5/06,** B 62 D 6/02

(21) Anmeldenummer: **85904817.5**

(22) Anmeldetag: **01.10.85**

(86) Internationale Anmeldenummer:
**PCT/EP 85/00510**

(87) Internationale Veröffentlichungsnummer:
**WO 86/02053 (10.04.86 Gazette 86/08)**

(54) SERVOLENKUNG, INSBESONDERE FÜR KRAFTFAHRZEUGE.

(30) Priorität: **05.10.84 PCT/EP84/00306**

(43) Veröffentlichungstag der Anmeldung:
**19.08.87 Patentblatt 87/34**

(45) Bekanntmachung des Hinweises auf die Patenterteilung:
**04.01.89 Patentblatt 89/1**

(84) Benannte Vertragsstaaten:
**DE FR GB**

(56) Entgegenhaltungen:
**DE-A-3 220 922**
**FR-A-2 095 700**
**GB-A-2 099 770**
**US-A-4 274 504**

(73) Patentinhaber: **ZAHNRADFABRIK
FRIEDRICHSHAFEN AKTIENGESELLSCHAFT,
Löwentaler Strasse 100 Postfach 2520, D-7990
Friedrichshafen 1 (DE)**

(72) Erfinder: **LANG, Armin, Rheinstrasse 10, D-7070
Schwäbisch Gmünd (DE)**

(74) Vertreter: **Raue, Reimund, Zahnradfabrik
Friedrichshafen AG Löwentaler Strasse 100
Postfach 2520, D-7990 Friedrichshafen 1 (DE)**

## Beschreibung

Die Erfindung betrifft eine Servolenkung, insbesondere für Kraftfahrzeuge, nach dem Oberbegriff des Anspruches 1.

Eine derartige "geschwindigkeitsabhängige" Lenkung, d. h. eine Lenkung, bei der die Höhe der hydraulischen Rückwirkungskraft in Abhängigkeit von der Fahrzeuggeschwindigkeit veränderbar ist, ist bekannt durch die DE-OS-3 122 370. Dabei entsteht durch die beiden Drosselstellen, von denen die eine einen in Abhängigkeit von der Fahrzeuggeschwindigkeit in der Regel elektronisch veränderbaren Drosselquerschnitt aufweist, ein Rückwirkungsdruck, der nicht dem Arbeitsdruck entspricht, sondern je nach Drosselstellung proportional zu dem Arbeitsdruck vermindert ist.

Um bei enger Kurvenfahrt, d. h. bei hoher hydraulischer Unterstützung oder bei einem etwaigen Ausfall der Elektronik die Betätigungskräfte am Lenkhandrad auf vertretbare Werte zu begrenzen, ist ein Druckminderventil vorgesehen, das die Höhe des Rückwirkungsdruckes und damit der Betätigungskraft auf einen bestimmten Wert begrenzt.

Die veränderbare Rückwirkung wird in Abhängigkeit von der Fahrzeuggeschwindigkeit üblicherweise so gesteuert, daß mit abnehmender Fahrzeuggeschwindigkeit der Arbeitsdruck im Verhältnis zur Betätigungskraft am Lenkhandrad stärker zunimmt. Dies läßt sich in einem Diagramm, in dem der Arbeitsdruck über der Betätigungskraft aufgetragen ist, durch Kennlinien mit unterschiedlichen Steigungen verdeutlichen. Die Kennlinien haben bei hohen Fahrzeuggeschwindigkeiten einen flachen Verlauf, der bei abnehmender Fahrzeuggeschwindigkeit zunehmend steiler wird. Bei entsprechendem Servodruck können so auch bei niedrigen Fahrzeuggeschwindigkeiten verhältnismäßig hohe Kräfte auftreten, die vom Fahrer des Fahrzeuges als unangenehm empfunden werden können, wenn eine Kurve entsprechend eng gefahren wird.

Der Erfindung liegt die Aufgabe zugrunde, eine Servolenkung mit geschwindigkeitsabhängiger Rückwirkungskraft zu schaffen, bei der mit einer Änderung der Fahrzeuggeschwindigkeit nicht nur die hydraulische Rückwirkung, sondern auch die Betätigungskraftbegrenzung veränderbar ist.

Diese Aufgabe wird durch die im Anspruch 1 angegebenen Merkmale gelöst. Zweckmäßige und vorteilhafte Ausgestaltungen sind in den Unteransprüchen angegeben.

Wird das Druckgefälle über den beiden Drosselstellen durch ein Druckminderventil auf einen bestimmten Wert begrenzt, so hängt der Abschneidepunkt nicht mehr von der Lenkhandkraft, sondern vom Servodruck ab. Das heißt, bei unterschiedlichen Fahrzeuggeschwindigkeiten ergeben sich unterschiedliche Abschneidekräfte. Durch entsprechende Auslegung des Druckminderventiles läßt sich für den jeweiligen Fahrzeuggeschwindigkeitsbereich ein bestimmter Maximalwert für die Lenkhandkraft erreichen.

Ein weiterer Vorteil der erfindungsgemäßen Anordnung liegt darin, daß das Steuerorgan mit in Abhängigkeit von der Fahrzeuggeschwindigkeit veränderbarem Drosselquerschnitt nur noch für einen Druckbereich zwischen null und dem maximalen Rückwirkungsruck ausgelegt sein muß. (Bei den Anordnungen nach dem Stand der Technik müßte das Steuerorgan mit dem vollen Druckbereich der Servopumpe beaufschlagbar sein.) Durch die erfindungsgemäße Anordnung kann deshalb auf den sonst erforderlichen Druckausgleich an dem Steuerorgan verzichtet werden.

Nachstehend wird die Erfindung anhand mehrerer in einer Zeichnung dargestellter Ausführungsbeispiele näher erläutert. Es zeigt

Fig. 1 eine schematische Darstellung der erfindungsgemäßen Servolenkung,

Fig. 2 bis Fig. 5 weitere Ausführungsbeispiele der Servolenkung,

Fig. 6 das Kennlinienfeld einer Servolenkung nach dem Stand der Technik,

Fig. 7 das Kennlinienfeld der erfindungsgemäßen Servolenkung.

Die Servolenkung enthält in einem nicht dargestellten Lenkgetriebe ein Steuerventil 1, über das einem Servomotor 2 Druckmittel von einer Servopumpe 3 zugeführt und von dort in einen Behälter 4 zurückgeführt wird.

Das Steuerventil 1 enthält in einem Ventilgehäuse 5 einen Kolben 6, der durch eine Betätigungseinrichtung in der Form eines Lenkhandrades zwangsläufig verschiebbar ist.

Das Druckmittel wird dem Steuerventil von der Servopumpe 3 in zwei Gehäuseringnuten 7 und 8 zugeführt. Zwei Kolbennuten 9 und 10 des Kolbens 6 stehen über zwei Leitungen 11 und 12 in Verbindung mit den beiden Arbeitsräumen des Servomotors 2. Eine zentrale Gehäuseringnut 13 steht über eine Rücklaufleitung 14 in Verbindung mit dem Behälter 4.

An den Enden des Kolbens 6 sind zwei Rückwirkungsräume 15 und 16 angeordnet. Von den Rückwirkungsräumen 15 und 16 gehen Rückwirkungsleitungen 17 und 18 aus, die sich zu einer gemeinsamen Leitung 19 vereinigen.

In den Rückwirkungsleitungen 17 und 18 sind zwischen den Rückwirkungsräumen 15 und 16 einerseits und der Leitung 19 andererseits feste Drosselstellen 20 und 21 angeordnet. Die Leitung 19 führt über ein Steuerorgan 22 zu der Druckleitung 23 der Servopumpe 3. Das Steuerorgan 22 ist beispielsweise als Düse-Drallplatte-System gemäß der US-PS-3 690 400 oder als elektro-hydraulischer Wandler gemäß DE-OS-3 041 824 ausgebildet. Wesentlich ist, daß mit dem Steuerorgan 22 in die Leitung 19 eine Drosselstelle zwischen den festen Drosselstellen 20 und 21 und der Druckleitung 23 eingeschaltet ist, die einen veränderbaren Drosselquerschnitt besitzt. Der Drosselquerschnitt ist in Abhängigkeit von der Fahrzeuggeschwindigkeit einstellbar.

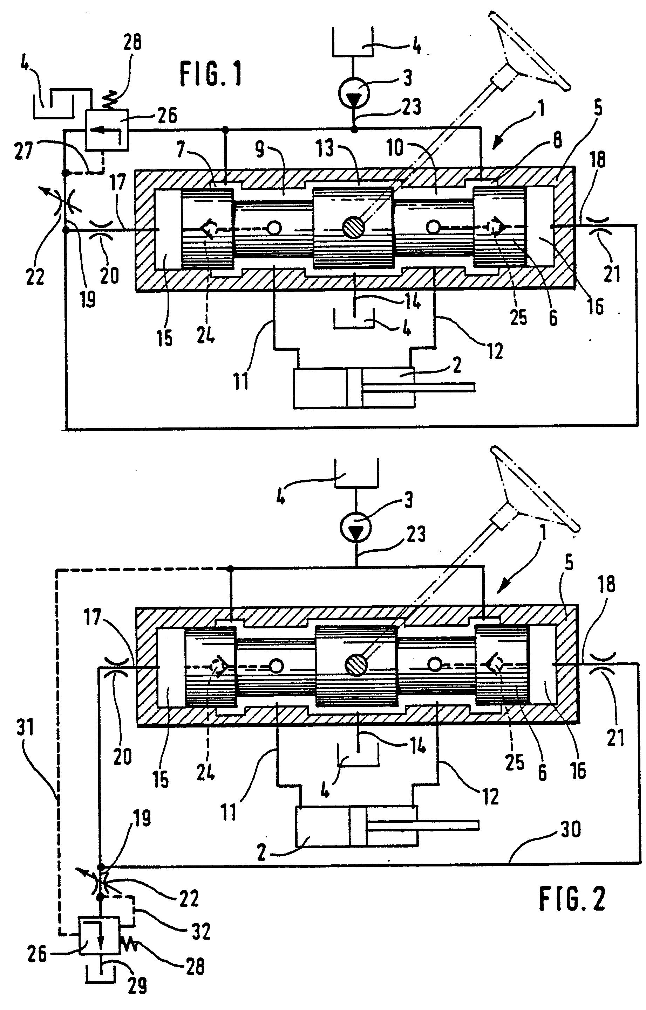

Zwischen den Rückwirkungsräumen 15 und 16 und den dazugehörigen Arbeitsräumen des Servomotors 2 sind Rückschlagventile 24 und 25 angeordnet, die in Richtung auf die Arbeitsräume des Servomotors 2 aufsteuerbar sind. Die Rückschlagventile können entweder - wie in Fig. 1 dargestellt - in dem Ventilkolben 6 zwischen den Kolbennuten 9 bzw. 10 einerseits und den Rückwirkungsräumen 15 bzw. 16 andererseits oder zwischen den Leitungen 11 bzw. 12 einerseits und den Rückwirkungsleitungen 17 bzw. 18 andererseits angeordnet sein.

In der Leitung 19 ist zwischen der Servopumpe 3 und dem Steuerorgan 22 ein Druckminderventil 26 angeordnet. Das Druckminderventil 26 ist einerseits über eine Steuerleitung 27 mit dem vor dem Steuerorgan 22 herrschenden Druck und andererseits mit dem Behälterdruck und mit der Kraft einer Feder 28 beaufschlagt. Dabei wirkt die Feder 28 auf das Druckminderventil 26 in Richtung auf seine Offenstellung. Da in beiden Lenkrichtungen der Druck hinter jeweils einer der Drosselstellen 20 bzw. 21 dem Druck in dem Behälter 4 entspricht, steht also über dem Druckminderventil 26 das volle Druckgefälle über den hintereinander geschalteten Drosselstellen 22 und 20 bzw. 21. Dieses Druckgefälle über den beiden Drosselstellen 22 und 20 bzw. 21 wird durch das Druckminderventil 26, also auf einen bestimmten Wert, eingestellt.

Während bei dem Ausführungsbeispiel nach Fig. 1 sowohl das Steuerorgan 22 als auch das Druckminderventil 26 zwischen der Servopumpe 3 und der an die beiden Drosselstellen 20 und 21 angeschlossenen Leitung 19 angeordnet sind, sind bei dem Ausführungsbeispiel nach Fig. 2 das Steuerorgan 22 und das Druckminderventil 26 in einer Rücklaufleitung 29 angeordnet, die die Fortsetzung bildet von der Leitung 19, die zwischen den beiden Drosselstellen 20 und 21 an die Verbindungsleitung 30 der beiden Rückwirkungsräume 15 und 16 angeschlossen ist. Das Druckminderventil 26 ist einerseits über eine Steuerleitung 31 an die Druckleitung 23 angeschlossen und damit durch den vor den beiden Drosselstellen 20 bzw. 21 und 22 herrschenden Druck beaufschlagt. Andererseits ist das Druckminderventil 26 über eine Steuerleitung 32 mit dem hinter dem Steuerorgan 22 und damit hinter den hintereinander geschalteten Drosselstellen 20 bzw. 21 und 22 herrschenden Druck und mit der Kraft der Feder 28 beaufschlagt.

Die Anordnung nach Fig. 2 unterscheidet sich von der Anordnung nach Fig. 1 außerdem noch dadurch, daß die Rückschlagventile 24 und 25 in Strömungsrichtung von den Arbeitsräumen des Servomotors 2 zu den Rückwirkungsräumen 15 bzw. 16 hin aufsteuerbar sind.

Der besondere Vorteil der Anordnung nach Fig. 2 liegt darin, daß die Rückwirkungsräume auch bei geschlossenem Steuerorgan 22 mit Druck beaufschlagt sind und dadurch eine höhere Dämpfungswirkung haben.

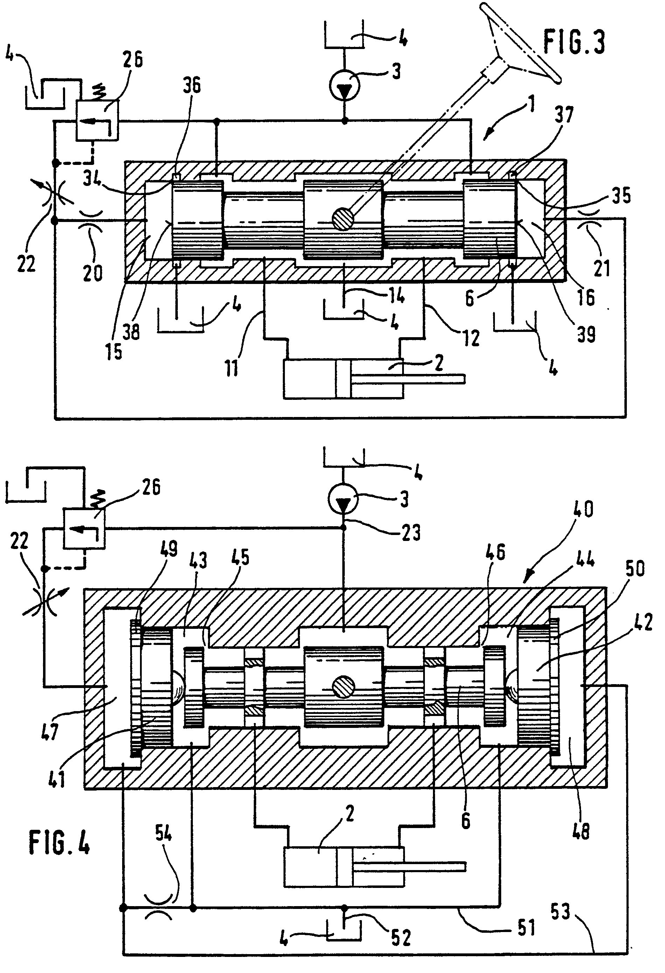

Fig. 3 zeigt die Anwendung der erfindungsgemäßen Anordnung der Drosselstellen 20, 21 und 22 und des Druckminderventiles 26 bei einem Steuerventil, bei dem die Rückwirkungsräume 15 und 16 nicht über Rückschlagventile 24 und 25, sondern über Steuerkantenpaare 34 und 35 gesteuert werden. Die Steuerkantenpaare 34 und 35 sind dabei gebildet zwischen jeweils einer Gehäuseringnut 36 bzw. 37 und jeweils einer Stirnfläche 38 bzw. 39 des Kolbens 6. Die beiden Gehäuseringnuten 36 und 37 sind an den Behälter 4 angeschlossen.

Fig. 4 zeigt die Anwendung des erfindungsgemäßen Druckminderventiles 26 auf eine Lenkung, deren Steuerventil 40 an den beiden Enden des Kolbens 6 Rückwirkungskolben 41 und 42 aufweist. Zwischen dem Kolben 6 und den Rückwirkungskolben 41 bzw. 42 sind innere Rückwirkungsräume 43 bzw. 44 gebildet, die durch Steuerkantenpaare 45 bzw. 46 gesteuert werden. Axial außerhalb der Rückwirkungskolben 41 und 42 sind äußere Rückwirkungsräume 47 bzw. 48 gebildet, von denen in jeder Lenkrichtung nur einer wirksam ist, da die Rückwirkungskolben 41 und 42 in ihrer Bewegung in Richtung auf die Mitte des Steuerventiles 40 durch Anschlagbunde 49 bzw. 50 begrenzt sind. Die inneren Rückwirkungsräume 43 und 44 sind durch eine Verbindungsleitung 51 direkt miteinander verbunden und durch eine Zweigleitung 52 an den Behälter 4 angeschlossen. Die äußeren Rückwirkungsräume 47 und 48 sind über eine Verbindungsleitung 53 direkt miteinander verbunden.

Die Druckleitung 23 von der Servopumpe 3 ist über das Druckminderventil 26 und das Steuerorgan 22 an einen der äußeren Rückwirkungsräume 47 bzw. 48 oder an die Verbindungsleitung 53 angeschlossen. Zwischen den Verbindungsleitungen 51 und 53 ist eine Drosselstelle 54 mit konstantem Querschnitt angeordnet. Die inneren Rückwirkungsräume 43 und 44 einerseits und die äußeren Rückwirkungsräume 47 und 48 andererseits entsprechen damit den Rückwirkungsräumen 15 und 16 der Ausführungsbeispiele nach den Fig. 1 bis 3. Durch die Trennung der inneren Rückwirkungsräume 43 und 44 und der äußeren Rückwirkungsräume 47 und 48 durch die Rückwirkungskolben 41 und 42 muß zwischen den beiden Rückwirkungsraumgruppen nur eine Drosselstelle 54 angeordnet sein.

Das Druckminderventil 26 ist bei dem Ausführungsbeispiel der Fig. 4 in gleicher Weise angeordnet und mit den gleichen Drücken beaufschlagt wie das Druckminderventil 26 in Fig. 1.

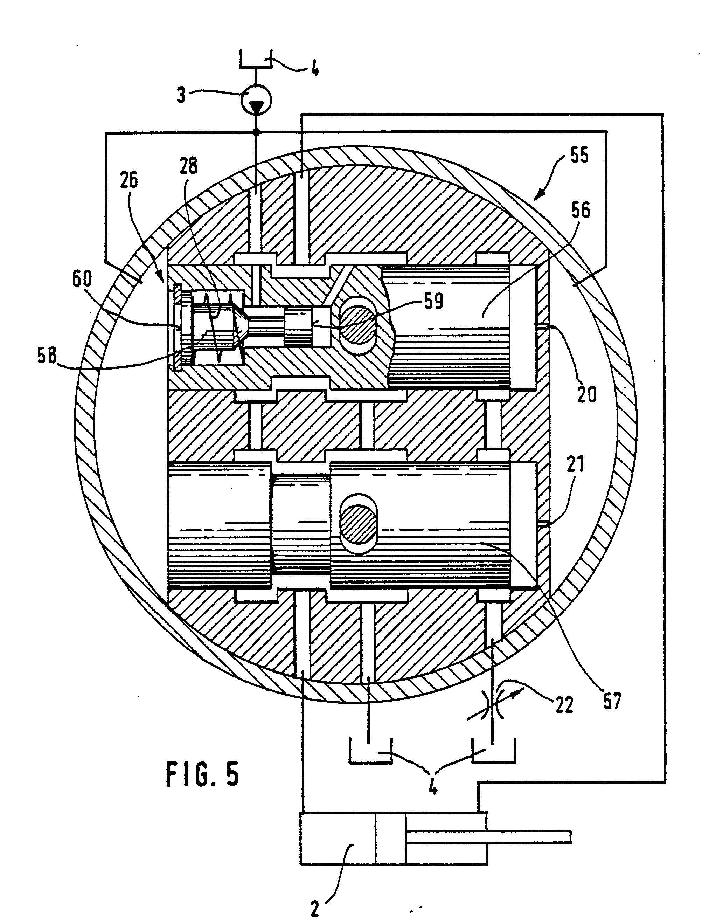

Fig. 5 zeigt ein Ausführungsbeispiel, dessen Steuerventil 55 zwei Kolben 56 und 57 aufweist. Hierbei ist das Druckminderventil 26 in dem einen Kolben 56 angeordnet. Ein Ventilkolben 58 des Druckminderventiles 26 weist eine kleinere Stirnfläche 59 auf, die von dem Druck hinter den beiden hintereinander geschalteten Drosselstellen 20 bzw. 21 und 22 beaufschlagt ist. Im Fall des Ausführungsbeispieles nach Fig. 5 ist dieser Druck der Druck des Behälters 4. In gleicher Richtung wie dieser Druck wirkt die Kraft der Feder 28. Auf die größere Stirnfläche 60 des Ventilkolbens 58 wirkt der vor den beiden hintereinander geschalteten Drosselstellen 20 bzw. 21 und 22 herrschende Druck.

Bei den Ausführungsbeispielen nach Fig. 3 und 5 können das Steuerorgan 22 und das Druckminderventil 26 entsprechend wie in Fig. 1 oder wie in Fig. 2 angeordnet sein.

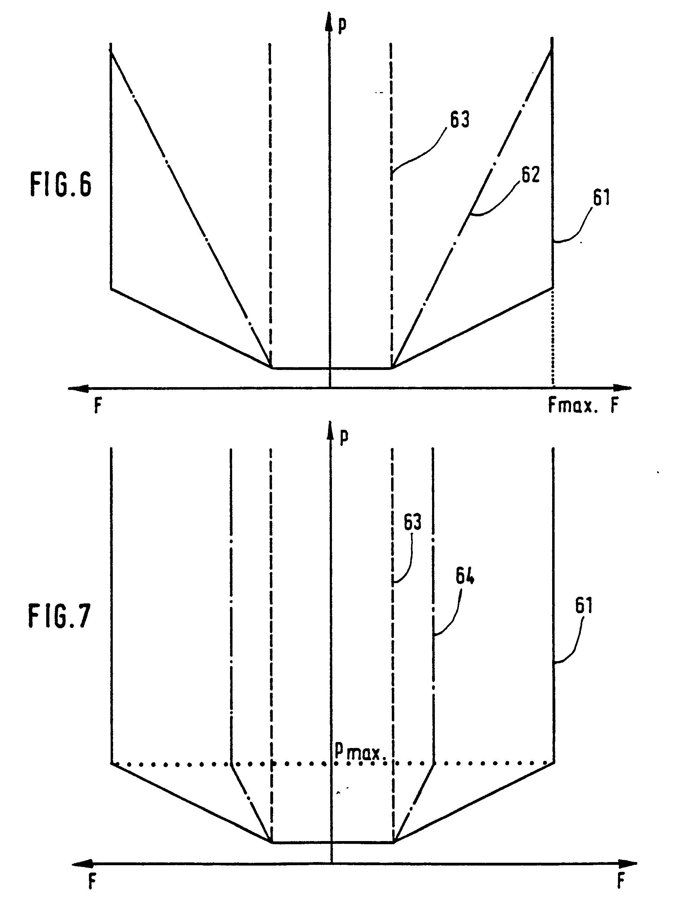

Fig. 6 zeigt das Kennlinienfeld einer Servolenkung nach dem Stand der Technik. Die veränderbare Rückwirkung wird bei bekannten Servolenkungen in Abhängigkeit von der Fahrzeuggeschwindigkeit so gesteuert, daß mit abnehmender Geschwindigkeit die Kennlinie von der durchgezogenen Linie 61 über die strichpunktierte Linie 62 bis zu der gestrichelten Linie 63 beim Parkieren verändert wird. Bei niedrigen Fahrzeuggeschwindigkeiten treten entsprechend der Linie 62 verhältnismäßig hohe Kräfte auf, die besonders bei sehr eng gefahrenen Kurven, wenn der Servodruck sehr hoch ansteigt, bis zur maximalen Abschneidekraft $F_{max}$ reichen.

In Fig. 7 ist das Kennlinienfeld für die erfindungsgemäße Anordnung der Servolenkung dargestellt. Liegt der Servodruck unterhalb der Ansprechschwelle des Druckminderventils 26, so arbeitet die Lenkung unverändert wie bei der Ausführung nach dem Stand der Technik. Übersteigt der Servodruck jedoch die Ansprech-Schwelle des Druckminderventils 26, so ändert sich unabhängig vom Druck der Servopumpe 3 der Druck vor den hintereinander geschalteten Drosselstellen 20 bzw. 21 und 22 nicht mehr. Damit bleiben auch die Strömungsverhältnisse durch die Drosselstellen und damit auch der Rückwirkungsdruck und die Betätigungskraft am Lenkhandrad konstant. Unabhängig von der Einstellung des Steuerorgans 22 verlaufen daher die Kennlinien oberhalb des Ansprechdruckes des

Druckminderventils 26, d. h. oberhalb des Druckes $P_{max}$ vertikal. Auch in Fig. 7 gilt die Linie 61 für eine hohe Fahrzeuggeschwindigkeit und die Linie 63 für eine niedrige Fahrzeuggeschwindigkeit. Die strichpunktierte Linie 64 ist ein Beispiel für eine Kennlinie bei einer mittleren Fahrzeuggeschwindigkeit.

**Bezugszeichen**

1 Steuerventil
2 Servomotor
3 Servopumpe
4 Behälter

5 Ventilgehäuse
6 Kolben
7 Gehäuseringnut
8 Gehäuseringnut
9 Kolbennut
10 Kolbennut
11 Leitung
12 Leitung
13 Gehäuseringnut
14 Rücklaufleitung
15 Rückwirkungsraum
16 Rückwirkungsraum
17 Rückwirkungsleitung
18 Rückwirkungsleitung
19 Leitung
20 Drosselstelle
21 Drosselstelle
22 Steuerorgan
23 Druckleitung
24 Rückschlagventil
25 Rückschlagventil
26 Druckminderventil
27 Steuerleitung
28 Feder
29 Rücklaufleitung
30 Verbindungsleitung
31 Steuerleitung
32 Steuerleitung
33
34 Steuerkantenpaar
35 Steuerkantenpaar
36 Gehäuseringnut
37 Gehäuseringnut
38 Stirnfläche
39 Stirnfläche
40 Steuerventil
41 Rückwirkungskolben
42 Rückwirkungskolben
43 Innerer Rückwirkungsraum
44 Innerer Rückwirkungsraum
45 Steuerkantenpaar
46 Steuerkantenpaar
47 Äußerer Rückwirkungsraum
48 Äußerer Rückwirkungsraum
49 Anschlagbund
50 Anschlagbund
51 Verbindungsleitung
52 Zweigleitung
53 Verbindungsleitung
54 Drosselstelle
55 Steuerventil
56 Kolben
57 Kolben
58 Ventilkolben
59 Kleinere Stirnfläche
60 Größere Stirnfläche
61 Kennlinie
62 Kennlinie
63 Kennlinie
64 Kennlinie

## Patentansprüche

1. Servolenkung, insbesondere für Kraftfahrzeuge, mit einem Servomotor (2), einer Servopumpe (3), einem Behälter (4) und einem Steuerventil (1), wobei das Steuerventil (1) wenigstens einen mit einer Betätigungseinrichtung in Verbindung stehenden Kolben (6) und für jeden Kolben zwei mit unterschiedlichen Drücken beaufschlagbare Räume (Rückwirkungsräume 15, 16) aufweist für die Erzeugung einer Rückwirkungskraft, wobei zwischen der Servopumpe (3) und dem Behälter (4) zwei Drosselstellen (20 bzw. 21 und 22) in Reihe geschaltet angeordnet sind, von denen wenigstens eine ein Steuerorgan (22) in Abhängikeit von der Fahrzeuggeschwindigkeit veränderbarem Drosselquerschnitt ist und wobei die Rückwirkung (15, 16) durch eine der beiden Drosselstellen voneinander getrennt sind, dadurch gekennzeichnet, daß das Druckgefälle über den beiden Drosselstellen (20 bzw. 21 und 22) durch ein Druckminderventil (26) auf einen bestimmten Wert einstellbar ist.

2. Servolenkung nach Anspruch 1, dadurch gekennzeichnet, daß das Druckminderventil (26) einerseits über eine Steuerleitung (27, 31) mit dem vor den hintereinander geschalteten Drosselstellen (20 bzw. 21 und 22) herrschenden Druck und andererseits mit dem hinter den Drosselstellen (20 bzw. 21 und 22) herrschenden Druck und mit der Kraft einer Feder (28) beaufschlagt ist.

3. Servolenkung nach Anspruch 2, dadurch gekennzeichnet, daß das Druckminderventil (26) zwischen der Servopumpe (3) und den hintereinander geschalteten Drosselstellen (20 bzw. 21 und 22) angeordnet ist.

4. Servolenkung nach Anspruch 2, dadurch gekennzeichnet daß das Druckminderventil (26) zwischen den hintereinander geschalteten Drosselstellen (20 bzw. 21 und 22) und dem Behälter (4) angeordnet ist.

5. Servolenkung nach einem der Ansprüche 1 bis 4, dadurch gekennzeichnet, daß das Druckminderventil (26) in einem Kolben (56) des Steuerventils (55) angeordnet ist.

## Claims

1. Power-assisted steering system, in particular for motor vehicles, comprising a servomotor (2), a servopump (3), a reservoir (4) and a control valve (1), the control valve (1) comprising at least one piston (6), which is connected to an operating device, and, for each piston, two chambers (reaction chambers 15, 16), which can be acted upon by different pressures, for producing a reaction force, two constrictions (20 or 21 and 22) being connected in series between the servopump (3) and the reservoir (4), at least one of which constrictions is a control member (22) with a throttle cross section which can be changed in accordance with the vehicle speed, and the reaction chambers (15, 16) being separated from one another by one of the two constrictions, characterized in that the pressure head over the two constrictions (20 or 21 and 22) can be adjusted to a certain value by a pressure reducing valve (26).

2. Power-assisted steering system according to claim 1, characterized in that the pressure reducing valve (26) is acted upon on one side by the pressure ahead of the series-connected constrictions (20 or 21 and 22) via a control line (27, 31) and on the other by the pressure after the constrictions (20 or 21 and 22) and by the force of a spring (28).

3. Power-assisted steering system according to claim 2, characterized in that the pressure reducing valve (26) is arranged between the servopump (3) and the series-connected constrictions (20 or 21 and 22).

4. Power-assisted steering system according to claim 2, characterized in that the pressure reducing valve (26) is arranged between the series-connected constrictions (20 or 21 and 22) and the reservoir (4).

5. Power-assisted steering system according to one of claims 1 to 4, characterized in that the pressure reducing valve (26) is arranged in a piston (56) of the control valve (55).

## Revendications

1. Servodirection, notamment pour véhicules à moteur, comportant un servomoteur (2), une servopompe (3), un réservoir (4) et une soupape de commande (1), la soupape de commande comportant au moins un piston (6) relié à un dispositif de commande et, pour chaque piston, deux chambres (chambres de réaction 15, 16) susceptibles de recevoir des pressions différentes pour créer une force de réaction, la servodirection comportant en outre, entre la servopompe (3) et le réservoir (4), deux étranglements (20 ou 21 et 22) montés en série, dont au moins l'un est un organe de commande (22) ayant une section d'étranglement variable en fonction de la vitesse du véhicule, et les chambres de réaction (15, 16) étant séparées par l'un des deux étranglements, caractérisée en ce que la chute de pression à travers les deux étranglements (20 ou 21 et 22) est réglable à une valeur déterminée au moyen d'une soupape de réduction (26).

2. Servodirection selon la revendication 1, caractérisée en ce que la soupape de réduction (26) reçoit d'une part, par un conduit de commande (27, 31), la pression régnant en amont des étranglements montés en série (20 ou 21 et 22), et d'autre part la pression régnant en aval des étranglements (20 ou 21 et 22), et la force d'un ressort (28).

3. Servodirection selon la revendication 2, caractérisée en ce que la soupape de réduction (26) est disposée entre la servopompe (3) et les étranglements montés en série (20 ou 21 et 22).

4. Servodirection selon la revendication 2, caractérisée en ce que la soupape de réduction (26) est disposée entre les étranglements montés en série (20 ou 21 et 22) et le réservoir (4).

5. Servodirection selon l'une des revendications 1 à 4, caractérisée en ce que la soupape de réduction (26) est disposée dans un piston (56) de la soupape de commande (55).

FIG.1

FIG.2

FIG.3

FIG.4

FIG. 5

FIG.6

FIG.7